Europäisches Patentamt

**European Patent Office**

Office européen des brevets

(11) Numéro de publication: **0 299 842 B1**

(12) **FASCICULE DE BREVET EUROPEEN**

(45) Date de publication de fascicule du brevet: **29.12.93** (51) Int. Cl.5: **G02F 1/03**, G02F 1/29

(21) Numéro de dépôt: **88401728.6**

(22) Date de dépôt: **04.07.88**

(54) Modulateur-commutateur électro-optique intégré à réponse passe-bande.

(30) Priorité: **17.07.87 FR 8710124**

(43) Date de publication de la demande:
**18.01.89 Bulletin  89/03**

(45) Mention de la délivrance du brevet:
**29.12.93 Bulletin  93/52**

(84) Etats contractants désignés:
**DE GB IT NL SE**

(56) Documents cités:
**GB-A- 2 190 512**
**US-A- 4 372 643**

**INTEGRATED AND GUIDED-WAVE OPTICS, TECHNICAL DIGEST, Atlanta, Georgia, 26-28 février 1986, pages 46-48; J.L. JACKEL et al.: "Nonsymmetric Mach-Zehnder interferometers used as low-drive voltage modulators"**

**JOURNAL OF LIGHTWAVE TECHNOLOGY, vol. LT-3, no. 1, février 1985, pages 47-51, IEEE, New York, US; L. THYLEN et al.: "Bandpass response traveling-wave modulator with a transit time difference compensation scheme"**

**JOURNAL OF OPTICAL COMMUNICATIONS,**

**vol. 2, no. 1, mars 1981, pages 2-6, Fachverlag Schiele & Schön, Berlin, DE; P.L. LIU: "Recent development in high speed integrated optical gates"**

(73) Titulaire: **THOMSON-CSF**
**51, Esplanade du Général de Gaulle**
**F-92800 Puteaux(FR)**

(72) Inventeur: **Papuchon, Michel**
**THOMSON - CSF**
**SCPI - 19, avenue de Messine**
**F-75008 Paris(FR)**
Inventeur: **Bourbin, Yannic**
**THOMSON - CSF**
**SCPI - 19, avenue de Messine**
**F-75008 Paris(FR)**

(74) Mandataire: **Grynwald, Albert et al**
**THOMSON-CSF,**
**SCPI,**
**B.P. 329,**
**50, rue Jean-Pierre Timbaud**
**F-92402 Courbevoie Cédex (FR)**

Rank Xerox (UK) Business Services
(3. 10/3.6/3.3. 1)

## Description

L'invention concerne un modulateur/commutateur électro-optique intégré à réponse passe-bande.

Quand on réalise un modulateur électro-optique, en général, à haute fréquence, il ne peut plus être considéré comme un composant à constantes localisées, mais à constantes réparties car ses dimensions deviennent de l'ordre de la longueur d'onde de l'onde électrique modulante appliquée. On est donc conduit à réaliser les électrodes sous forme de lignes de transmission électriques dont l'impédance caractéristique est choisie en fonction de l'utilisation. Du fait de la différence des fréquences entre les ondes optiques guidées et les ondes électriques de modulation, ces deux ondes se propagent avec des constantes de propagation différentes (indices effectifs de refraction), ce qui entraine une limitation dans la bande passante des modulateurs.

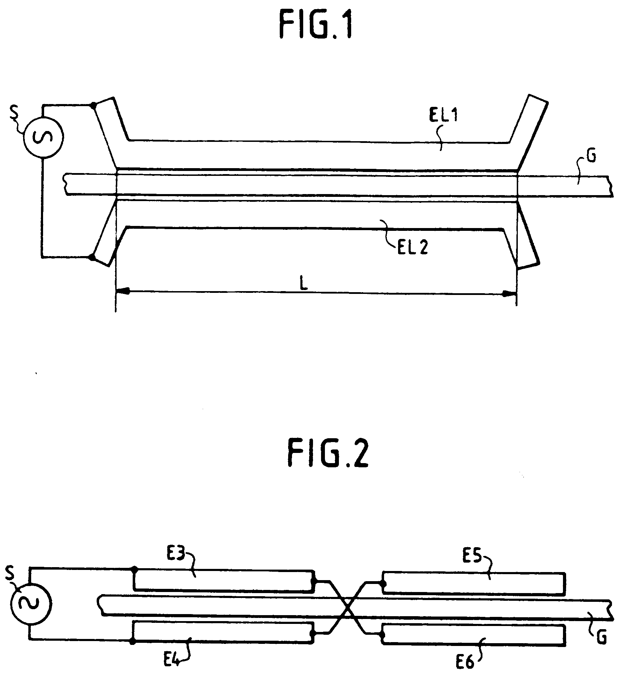

Ainsi pour un modulateur de phase, tel que représenté en figure 1, et comprenant un guide optique G soumis à un champ électrique alternatif produit par deux électrodes E1 et E2 encadrant le guide G et une source de courant S, on peut montrer que le déphasage induit dans un dispositif tel que celui représenté en figure 1 est strictement nul à la fréquence :

$$f_o = \frac{c}{L(n_e - n_o)}$$

avec :
- L, la longueur d'interaction,
- c, la vitesse de la lumière dans le vide,
- $n_e$, l'indice effectif électrique,
- $n_o$, l'indice effectif optique.

L'explication physique de ce phénomène est qu'à cette fréquence, un groupe de photons traversant le modulateur voit une alternance positive du champ de modulation pendant la première moitié du dispositif et une alternance négative pendant la seconde moitié. Dans le cas de modulateurs électro-optiques par effet Pockels, la variation d'indice est une fonction linéaire du champ appliqué et donc le déphasage total est nul. Ce phénomène est à rapprocher du problème dit "accord de phase" en optique non linéaire.

La bande passante d'un tel dispositif est donc reliée directement aux propriétés du substrat aux fréquences optiques et électriques ainsi qu'à la longueur d'interaction.

Dans certaines applications, il est intéressant d'utiliser des modulateurs dont la réponse en fréquence n'est pas du type passe-bas (fréquence nulle à fréquence maximale) mais plutôt du type passe-bande : $f_1 \leftrightarrow f_2$ autour d'une fréquence $f_o$ de fonctionnement (transmission de signaux radars, par exemple).

Dans le cas du modulateur de phase décrit précédemment, on peut alors utiliser la configuration d'électrodes représentée en figure 2. Selon cette configuration, on prévoit deux couples d'électrodes E3-E4 et E5-E6 alimentés en alternatif par une source de tension S. La connexion des électrodes est croisée de façon que l'électrode E3 est connectée à l'électrode E6 et l'électrode E4 à l'électrode E5. Cette configuration permet d'inverser le signe du champ appliqué dans les deux moitiés du modulateur. Dans ce cas, à fréquence nulle, le déphase accumulé est exactement nul, par contre, à la fréquence donnée par l'équation précédente, le déphasage est maximal. Notons que, grâce à la symétrie autour de la fréquence $f_o$, la bande passante du dispositif de la figure 2 est double de celui de la figure 1 pour une même longueur totale d'électrodes.

Naturellement, ce principe simple peut être appliqué à des électrodes multi-sections pour augmenter la fréquence de travail si la longueur d'interaction est fixée.

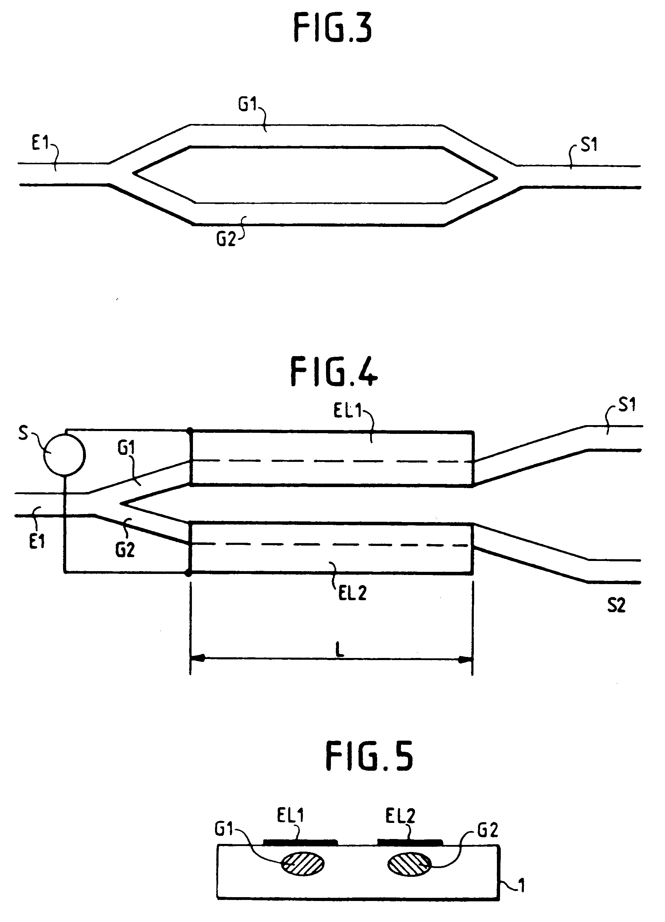

Dans le cas où un modulateur d'amplitude est préférable, on peut appliquer ce principe à l'un ou aux deux bras d'un interféromètre dont le schéma de base est représenté sur la figure 3 et qui comporte deux guides G1 et G2, un guide d'entrée E1 et un guide de sortie S1.

GB-A-2 190 512 divulgue un commutateur électro-optique d'un type tel que décrit dans la première partie de la revendication 1. Dans le cas de ce dispositif selon l'état de la technique, le champ électrique appliqué ne simule pas un fonctionnement à N sections d'électrodes; la fréquence du champ électrique n'est pas fonction du nombre de sections simulées.

Dans les exemples donnés ci-dessus, pour travailler autour de la fréquence $f_o$, on est amené à scinder les électrodes de commandes en plusieurs parties ou au moins à adopter des configurations dont la complexité peut rendre délicat leur emploi à des fréquences élevées.

L'invention concerne un dispositif permettant d'utiliser une électrode classique, la résonance autour de $f_o$ étant obtenue optiquement.

Le principe de base du dispositif de l'invention est de mettre à profit cette différence entre constantes de propagation optiques et électriques plutôt que d'essayer de la compenser par des électrodes multi-sections.

L'invention concerne donc un modulateur/commutateur électro-optique intégré à réponse passe-bande comprenant les caractéristiques techniques de la revendication 1.

Les différents objets et caractéristiques de l'invention apparaîtront plus clairement dans la description qui va suivre faite à titre d'exemple en se reportant aux figures annexées qui représentent :
- les figures 1 à 3, des dispositifs de l'art connu déjà décrits précédemment ;
- la figure 4, un exemple de réalisation du dispositif selon l'invention ;
- la figure 5, une vue en coupe des guides G1 et G2 de la figure 4 ;
- la figure 6, une courbe illustrant le fonctionnement du dispositif de la figure 4 ;
- la figure 7, un exemple de réalisation à deux sections du dispositif de l'invention ;
- la figure 8, un diagramme de commutation du dispositif à deux sections de la figure 7 ;
- la figure 9, un diagramme de commutation du dispositif de l'invention à quatre sections ;
- la figure 10, un diagramme montrant les lieux de modulation d'égales efficacités pour un dispositif à quatre sections ;
- la figure 11, une courbe de réponse en fréquence du dispositif de l'invention ;
- la figure 12, un exemple de réalisation en coupe du dispositif de l'invention.

Selon l'invention au lieu d'utiliser une configuration du type modulateur de phase, une structure permettant d'obtenir un effet non nul en continu avec des systèmes d'électrodes multi-sections on utilise une électrode unisection à une fréquence de travail voulue, de telle façon qu'on simule un fonctionnement multi-sections. Pour obtenir une réponse quasi-linéaire, l'exemple de réalisation du dispositif à la figure 4, est utilisé. Celui-ci est un coupleur directionnel alimenté par une jonction Y. Il comporte deux guides couplés G1 et G2 connectés à un guide d'entrée E1 par une jonction en forme de Y.

La jonction Y est symétrique et répartit de façon égale dans les deux guides G1 et G2 l'énergie lumineuse reçue sur le guide d'entrée E1. Les deux guides G1 et G2 reçoivent donc deux ondes lumineuses de même fréquence, en phase et la même énergie.

Les guides G1 et G2 sont surmontés par des électrodes EL1 et EL2 connectées à une source de tension S.

Comme cela est représenté en figure 5, les guides G1 et G2 sont réalisés dans un substrat 1 selon les techniques de l'optique intégrée. Les électrodes EL1 et EL2 sont disposées au-dessus des guides G1 et G2 respectivement.

Les électrodes EL1 et EL2 ont une longueur L définissant une longueur d'interaction.

Par ailleurs, les guides G1 et G2 étant couplés, dans le cas de la figure 4 où une électrode unisection est utilisée, si la longueur de couplage $L_c$ et la longueur d'interaction L vérifient la relation :

$$L/L_c = \frac{1}{\sqrt{2}}$$

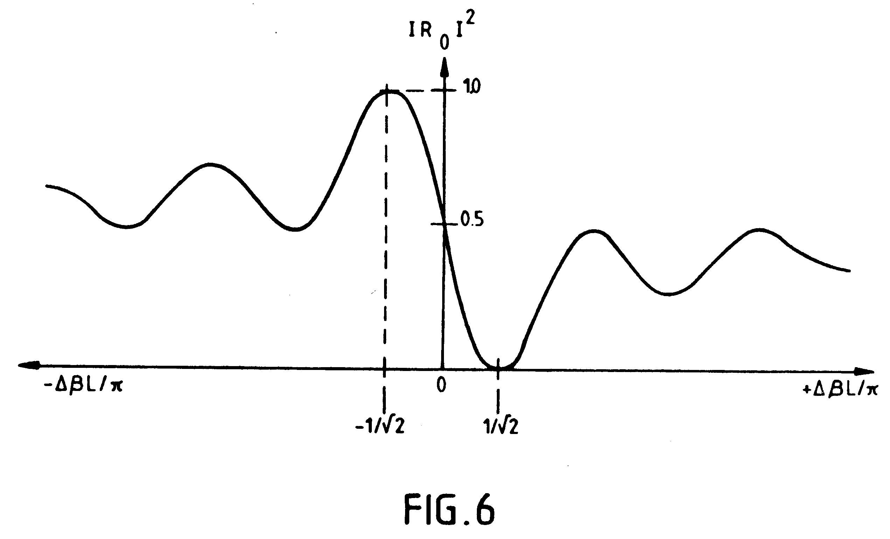

et si $\Delta\beta$ étant la variation de la constante de propagation optique entre les deux guides, une courbe de réponse de la figure 6 est alors obtenue quand on applique un $\Delta\beta$ entre les deux guides. Dans ce cas, le dispositif a bien une réponse linéaire autour de $\Delta\beta = 0$.

Une analyse détaillée du fonctionnement d'un tel dispositif permet de montrer qu'il peut fonctionner avec des électrodes multi-sections.

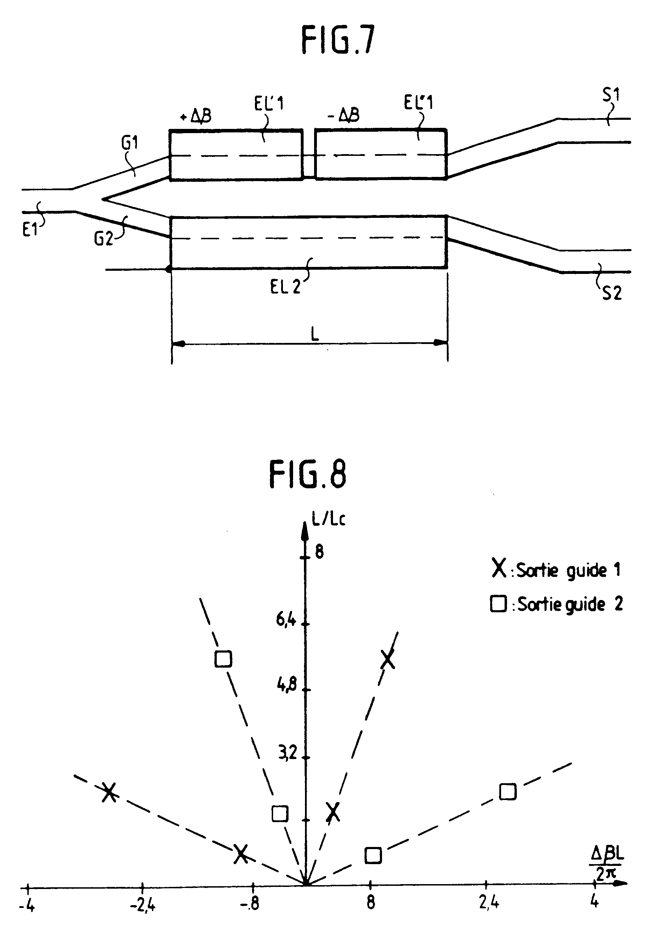

La figure 7 représente un dispositif à deux sections selon l'invention selon lequel l'électrode du guide G1 a été scindée en deux électrodes identiques EL'1 et EL''1. Ces électrodes sont alimentées électriquement de façon à fournir des champs électriques déphasés de $\pi$ radians. On peut également obtenir un résultat similaire avec des électrodes connectées comme en figure 2.

La figure 8 correspond au diagramme de commutation du dispositif à deux sections de la figure 7. En abscisse, on a porté le

$$\frac{\Delta\beta L}{2\pi}$$

créé entre les deux guides et en ordonnées $L/L_c$. Les croix correspondent aux points où l'énergie a été transférée vers le guide G1 et les carrés aux points où l'énergie a été transférée vers le guide G2.

On voit que seules certaines valeurs de $L/L_c$ permettent d'obtenir 100% de modulation. Ces valeurs de $L/L_c$ sont celles satisfaisant la relation :

$$L/L_c = N \cos(\pi/4N).$$

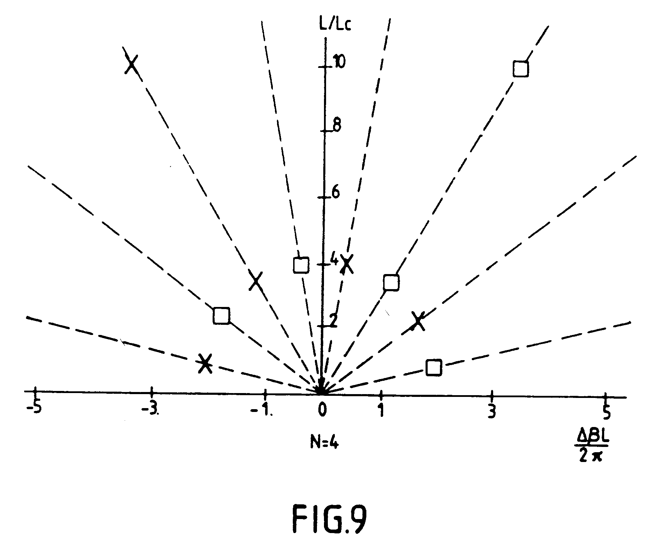

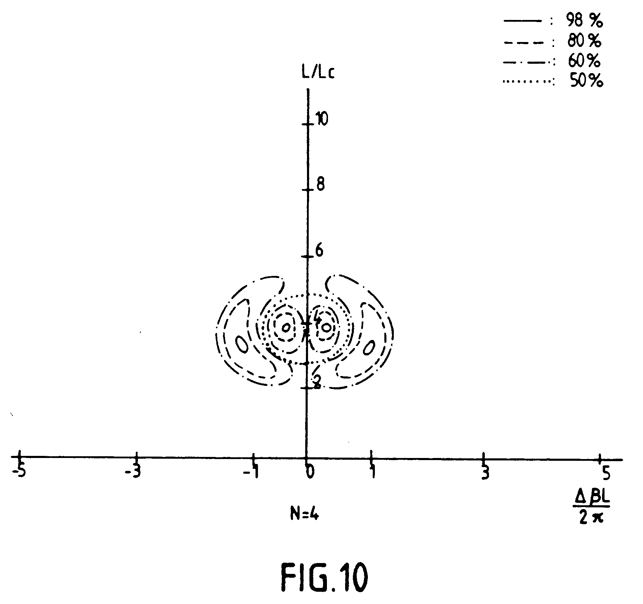

La figure 9 donne un exemple de fonctionnement d'un dispositif à 4 sections et la figure 10 (4 sections) montre les lieux correspondants à 99%, 80%... de modulation permettant ainsi de définir avec quelle précision on doit réaliser le dispositif pour obtenir un taux de modulation donné.

Avec un tel principe de fonctionnement, on conçoit aisément que, pour une longueur d'interaction et des indices effectifs optiques et électriques donnés, le dispositif avec une électrode homogène (unisection) travaillera à 1, 2,... sections selon la fréquence de l'onde de modulation comme cela a été décrit précédemment.

Le rapport $L/L_c$ de la longueur d'interaction L à la longueur de couplage $L_c$ a une valeur telle que pour une différence $\Delta v$ (que l'on détermine) des vitesses de propagation des ondes optique et électrique, l'onde optique dans chaque guide G1, G2

voit successivement les alternances positives et négatives du champ électrique fourni par la source S et appliqué le long des guides G1, G2 simulant ainsi, pour une fréquence de modulation déterminée, un fonctionnement multi-sections d'électrodes à renversement de champ appliqué pour le même dispositif qui serait utilisé en fréquence nulle.

Selon l'invention, un fonctionnement à N sections simulées est obtenu en appliquant un champ électrique de fréquence $f_N$ répondant à la relation :

$$f_N = \frac{N}{2} \quad \frac{c}{L(n_e - n_o)}$$

Cette relation est valable pour une propagation dans le même sens des ondes électrique et optique.

Pour une propagation en sens contraire de ces ondes, la relation donnant $f_N$ est :

$$f_N = \frac{N}{2} \quad \frac{c}{L(n_e + n_o)}$$

Enfin, il convient de préciser que dans le cas d'un dispositif à multisections d'électrodes (N couples d'électrodes), avec un champ à fréquence nulle, le dispositif travaillant alors à renversement de champ par connexions croisées des électrodes (voir par exemple la figure 2), l'invention prévoit d'avoir :

$$\frac{L}{L_c} \simeq N \cos \frac{\pi}{4N}$$

On aura alors une efficacité de commutation de sensiblement 100% vers l'un ou l'autre des deux guides G1 ou G2.

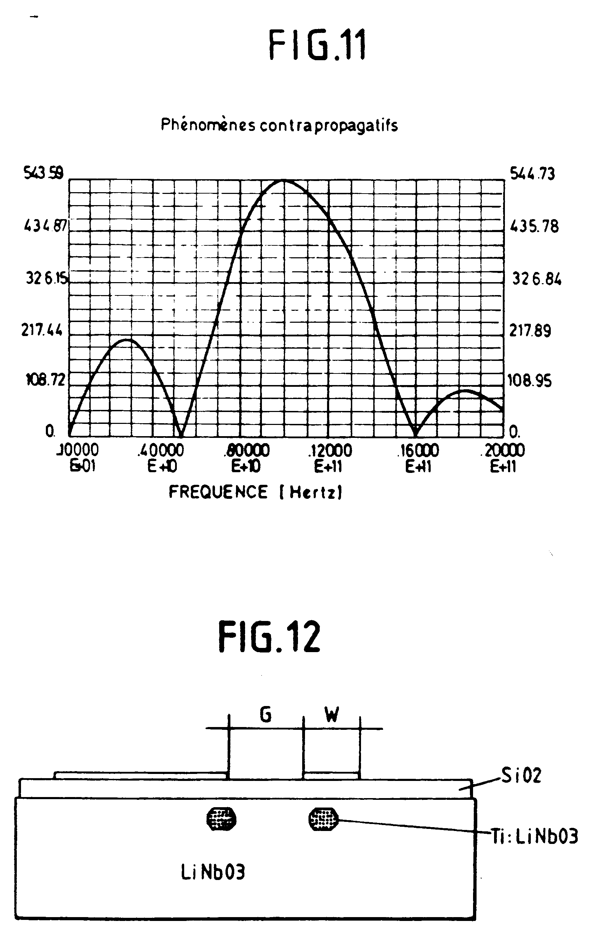

Un exemple de fonctionnement de ce type est démontré sur la figure 11 où on a représenté la réponse en fréquence d'un modulateur tel que celui de la figure 4, dont les caractéristiques sont les suivantes :

Matériau utilisé: LiNb0$_3$ avec :

indice effectif optique = 2.2

indice électrique optique = 4.25

longueur d'interaction = 8.56 mm

$L/L_c$ = 3.92

ondes optiques et électriques contra-propagatives et adaptation de toutes les impédances réalisées.

Dans ce cas, le modulateur a un comportement résonnant électro-optique du type à 4 sections autour de la fréquence 10 GHz.

Il faut noter que la fréquence de travail est directement liée au choix de $L/L_c$ et que, en fait, la bande passante est liée à la longueur de l'électrode.

A titre d'exemple, le descriptif de l'invention peut être réalisé de la façon suivante :

On peut utiliser un substrat de LiNb0$_3$ dans lequel les guides d'ondes sont fabriqués par diffusion de titane. A 1,3 $\mu$m, la largeur de la bande de titane avant diffusion peut être de 7 microns et son épaisseur de 450 Å pour permettre l'obtention de guides monomodes (diffusion à 950°C pendant 6 heures.

Sur les guides, on dépose une couche tampon de SiO$_2$ (épaisseur ~ 3000Å) pour isoler le mode guidé des électrodes métalliques et ainsi minimiser les pertes à la propagation. La technique de dépôt utilisée peut être :

- dépôt en phase vapeur
- pulvérisation.

Les électrodes sont obtenues par masquage d'une couche d'or (réalisée par évaporation ou pulvérisation) de faible épaisseur. Cette dernière est ensuite augmentée jusqu'à environ 4 microns par dépôt électrolytique pour diminuer les pertes ohmiques d'électrodes (figure 11). La géométrie des électrodes est choisie pour assurer la transmission électromagnétique de l'onde de modulation. Dans le cas de la figure 11, la ligne est du type asymétrique coplanaire. Pour assurer une impédance caractéristique de 50 $\Omega$, le rapport W/G doit être égal à 0,6, ce qui, pour un espace G typique de 10 microns conduit à une largeur W de l'ordre de 6 microns.

Il est bien évident que la description qui précède n'a été faite qu'à titre d'exemple non limitatif. Les formes de réalisation et les exemples numériques n'ont été fournis que pour illustrer la description. D'autres variantes peuvent être envisagées sans sortir pour autant du cadre de l'invention.

**Revendications**

1. Modulateur/commutateur électro-optique intégré à réponse passe-bande comprenant :
   - un substrat (1) avec un premier et un deuxième guides optiques (G1, G2) intégrés couplés optiquement entre eux présentant une longueur de couplage L$_c$ déterminée ;
   - une jonction optique en forme de Y connectant optiquement les deux guides optiques (G1, G2) à un guide d'entrée (E1), recevant une onde d'entrée par le guide d'entrée (E1) , répartissant cette onde d'entrée de façon symétrique vers le premier et le deuxième guides optiques (G1, G2) ;

- au moins une première électrode (EL1) associée au premier guide optique (G1) et au moins une deuxième électrode (EL2) associée au deuxième guide optique (G2),

une source de tension (S) permettant d'appliquer, par l'intermédiaire des électrodes, au moins un champ électrique auxdits guides optiques (G1, G2) selon une longueur d'interaction L déterminée ; caractérisé en ce que :

- les vitesses de propagation dans les deux guides optiques (G1, G2) des ondes optiques et électriques présentent une différence de vitesse déterminée en raison soit d'indices optique et électrique différents, soit de directions de propagations différentes des ondes optique et électrique, soit des deux à la fois ;

- la source de tension (S) fournit une tension alternative ;

- le rapport $L/L_c$ de la longueur d'interaction L à la longueur de couplage $L_c$ a une valeur telle que, pour une différence $\Delta v$ donnée des vitesses de propagation des ondes optique et électrique, l'onde optique dans chaque guide (G1, G2) voit successivement les alternances positives et négatives du champ électrique fourni par la source (S) et appliqué le long des guides (G1, G2) simulant ainsi, pour une fréquence de modulation donnée un fonctionnement à N sections d'électrodes,

cette valeur étant $L/L_c$ = N cos (¶/4N); et en ce que la source (S) de tension permet l'application d'un champ électrique alternatif dont la fréquence a une valeur proportionnelle au nombre de sections N simtulées et à la vitesse de la lumière c dans le vide, et inversement proportionnelle au double de la longueur d'interaction L multiplié par la somme des indices électrique et optique $n_e$ et $n_o$ lorsque les ondes optique et électrique se propagent en sens opposés, ou multiplié par la différence de ces indices lorsque les ondes optique et électrique se propagent dans le même sens, cette fréquence étant

$$f_N = \frac{N}{2} \frac{c}{L(n_e \pm n_o)} .$$

2. Modulateur/commutateur électro-optique selon la revendication 1, caractérisé en ce que le substrat (1) est en matériau électro-optique.

3. Modulateur/commutateur électro-optique selon la revendication 1, caractérisé en ce que le substrat (1) est en niobate de lithium et les guides optiques sont réalisés par diffusion de titane.

4. Modulateur/commutateur électro-optique selon la revendication 1, caractérisé en ce que le substrat (1) dans lequel sont réalisés les guides optiques (G1, G2) est recouvert d'une couche tampon sur laquelle sont réalisées les électrodes isolant les modes guidés des électrodes.

5. Modulateur/commutateur électro-optique selon la revendication 4, caractérisé en ce que la couche tampon est un oxyde de silicium.

**Claims**

1. Electro-optic integrated modulator/commutator with bandpass response comprising:
   - a substrate (1) with a first and a second integrated optical guide (G1, G2) optically coupled together and having a specified coupling length $L_c$;
   - a Y shaped optical junction optically connecting the two optical guides (G1, G2) with an input guide (E1), receiving an input wave via the input guide (E1), distributing this input wave symmetrically towards the first and second optical guides (G1, G2);
   - at least one first electrode (EL1) associated with the first optical guide (G1), and at least one second electrode (EL2) associated with the second optical guide (G2),
   - a voltage source (S) enabling at least one electric field to be applied, by way of the electrodes, to the said optical guides (G1, G2) over a specified interaction length L;
     characterized in that:
   - the velocities of propagation in the two optical guides (G1, G2) of the optical and electric waves exhibit a specified velocity difference by virtue either of differing optical and electrical indices, or of differing directions of propagation of the optical and electric waves, or of both at once;
   - the voltage source (S) provides an alternating voltage;

- the ratio $L/L_c$ of the interaction length L to the coupling length $L_c$ has a value such that, for a given difference $\Delta v$ in the velocities of propagation of the optical and electric waves, the optical wave in each guide (G1, G2) sees successively the positive and negative alternations of the electric field provided by the source (S) and applied along the guides (G1, G2) thus simulating, for a given modulating frequency, operation with N electrode sections, this value being $L/L_c = N \cos(\pi/4N)$; and in that the voltage source (S) allows the application of an alternating electric field whose frequency has a value proportional to the number of simulated sections N and to the velocity of light c in vacuo, and inversely proportional to twice the interaction length L multiplied by the sum of the electrical and optical indices $n_e$ and $n_o$ when the optical and electric waves propagate in opposite directions, or multiplied by the difference of these indices when the optical and electric waves propagate in the same direction, this frequency being

$$f_N = \frac{N}{2} \frac{c}{L(n_e \pm n_o)}.$$

2. Electro-optic modulator/commutator according to Claim 1, characterized in that the substrate (1) is made of an electro-optical material.

3. Electro-optic modulator/commutator according to Claim 1, characterized in that the substrate (1) is made of lithium niobate and the optical guides are made by diffusion of titanium.

4. Electro-optic modulator/commutator according to Claim 1, characterized in that the substrate (1) in which the optical guides (G1, G2) are made is covered with a buffer layer on which are made the electrodes which isolate the guided modes of the electrodes.

5. Electro-optic modulator/commutator according to Claim 4, characterized in that the buffer layer is an oxide of silicon.

**Patentansprüche**

1. Elektrooptischer integrierter Anpaß-Modulator/Schalter mit:
   - einem Substrat (1) mit ersten und zweiten integrierten optischen Leitern (G1, G2), die optisch miteinander gekoppelt sind und eine bestimmte Kopplungslänge $L_c$ aufweisen;
   - eine optische Zusammenführung in Y-Form, die die optischen Leiter (G1, G2) optisch mit einem Eingangsleiter (E1) verbindet, eine Eingangswelle von dem Eingangsleiter (E1) empfängt und diese Eingangswelle symmetrisch auf den ersten und den zweiten optischen Leiter (G1, G2) verteilt;
   - wenigstens eine erste Elektrode (EL1), die dem ersten optischen Leiter (G1) zugeordnet ist, sowie wenigstens eine zweite Elektrode (EL2), die dem zweiten optischen Leiter (G2) zugeordnet ist;
   - eine Spannungsquelle (S), mit deren Hilfe mittels der Elektroden wenigstens ein elektrisches Feld über eine vorbestimmte Wechselwirkungslänge an die optischen Leiter (G1, G2) angelegt werden kann; dadurch gekennzeichnet, daß:
   - die Ausbreitungsgeschwindigkeiten der optischen und elektrischen Wellen in den zwei optischen Leitem (G1, G2) wegen der unterschiedlichen optischen und elektrischen Brechnungsindizes oder der unterschiedlichen Ausbreitungsrichtungen der optischen und elektrischen Wellen oder aus diesen beiden Gründen eine bestimmte Geschwindigkeitsdifferenz aufweisen;
   - die Spannungsquelle (S) eine Wechselspannung liefert;
   - das Verhältnis $L/L_c$ der Wechselwirkungslänge L zur Kopplungslänge $L_c$ einen solchen Wert hat, daß für eine gegebene Differenz $\Delta$ der Ausbreitungsgeschwindigkeiten der optischen und elektrischen Wellen die optische Welle in jedem Leiter (G1, G2) nacheinander positive und negative Halbperioden des von der Quelle (S) gelieferten und entlang der Leiter (G1, G2) angelegten elektrischen Feldes sieht, so daß auf diese Weise für eine gegebene Modulationsfrequenz eine Arbeitsweise mit N Elektrodenabschnitten simuliert wird, wobei für diesen Wert gilt $L/L_c = N \cos(\pi/4N)$; und daß die Spannungsquelle (S) das Anlegen eines Wechselfeldes ermöglicht, dessen Frequenz einen Wert hat, der der Anzahl der simulierten Abschnitte N und der Lichtgeschwindigkeit im Vakuum proportional ist, und der doppelten Wechselwirkungslänge L, multipliziert mit der Summe der elektrischen und optischen Indizes $n_e$ und $n_o$ bei Ausbreitung der

optischen und elektrischen Wellen in entgegengesetzten Richtungen oder multipliziert mit der Differenz dieser Indizes bei einer Ausbreitung der optischen und elektrischen Wellen in der gleichen Richtung umgekehrt proportional ist, wobei diese Frequenz beträgt

$$f_N = \frac{N}{2} \cdot \frac{c}{L(n_e \pm n_o)}$$

2. Elektrooptischer Modulator/Schalter nach Anspruch 1, dadurch gekennzeichnet, daß das Substrat (1) aus einem elektrooptischen Material besteht.

3. Elektrooptischer Modulator/Schalter nach Anspruch 1, dadurch gekennzeichnet, daß das Substrat (1) aus Lithiumniobat besteht und daß die optischen Leiter durch Diffusion von Titan gebildet sind.

4. Elektrooptischer Modulator/Schalter nach Anspruch 1, dadurch gekennzeichnet, daß das Substrat (1), in dem die optischen Leiter (G1, G2) gebildet sind, mit einer Pufferschicht bedeckt ist, in der die Elektroden gebildet sind und die die geführten Moden dieser Elektroden isoliert.

5. Elektrooplischer Modulator/Schalter nach Anspruch 4, dadurch gekennzeichnet, daß die Pufferschicht aus einem Siliciumoxid besteht.

# FIG.1

# FIG.2

## FIG.3

G1

E1

S1

G2

## FIG.4

EL1

S1

S

G1

E1

G2

EL2

S2

L

## FIG.5

EL1

EL2

G1

G2

1

FIG.6

EP 0 299 842 B1

# FIG.7

# FIG.8

X : Sortie guide 1

□ : Sortie guide 2

FIG.9

FIG.10

# FIG.11

Phénomènes contrapropagatifs

FREQUENCE [Hertz]

# FIG.12